# EUROPEAN PATENT APPLICATION

(11) **EP 2 832 812 A1**
(43) Date of publication of application: **04.02.2015**
(21) Application number: 14177967.8
(22) Date of filing: 22.07.2014
(51) Int. Cl.: C09J 175/06, H01M 8/02

(54) **Sealant**

(30) Priority: 29.07.2013 JP 2013156742; 10.01.2014 JP 2014003720; 05.03.2014 JP 2014042970
(71) Applicant: Nitto Shinko Corporation, Sakai-shi, Fukui, 910-0381 (JP)
(72) Inventor: Takayanagi, Kayoko, Fukui 910-0381 (JP); Aoike, Shuuhei, Fukui 910-0381 (JP); Inoue, Tatsuya, Fukui 910-0381 (JP); Fujii, Takahiro, Fukui 910-0381 (JP); Mitsuya, Keiichi, Fukui 910-0381 (JP)
(74) Representative: Stolmár & Partner

(57) **Abstract**

Provided is a sealant (20) for use in contact with a polyelectrolyte membrane (10); at least the sealant surface contacting the polyelectrolyte membrane is constituted of a resin composition containing a crystalline polyester resin as a main component; the resin composition has a storage elastic modulus at 40°C of 2.5 MPa or more and 5 MPa or less; the resin composition further contains an epoxy resin and an isocyanate-based crosslinking agent; and the crystalline polyester resin is crosslinked with the isocyanate-based crosslinking agent.

## Description

### BACKGROUND OF THE INVENTION

### FIELD

The present invention relates to a sealant, particularly to a sealant used to seal the periphery of a polyelectrolyte membrane of a fuel cell generating power by the reaction of hydrogen and oxygen.

### BACKGROUND

In recent years, there has been broadly used as a clean energy source a power generating system called fuel cells generating electricity by supplying oxygen to one of reaction spaces partitioned by a polyelectrolyte membrane and supplying hydrogen to the other thereof, and allowing the hydrogen and the oxygen to react.

This type of fuel cells is so constituted that an annular sealant is made to contact along the outer periphery of the polyelectrolyte membrane in order to separate the reaction spaces from the external environment. As the sealant, an elastic member such as a fluororubber ring is used as shown in Japanese Patent Laid-Open No. 2012-89330 (see paragraph 0016).

The sealing in fuel cells is carried out also using a hot melt adhesive agent as shown in Japanese Patent Laid-Open No. 2007-66768 (see paragraph 0045).

Among these sealing methods, the method in which an elastic member such as a fluororubber ring is used has an advantage in that a likelihood of imparting thermal damage to the polyelectrolyte membrane is low, since an operation of thermally adhering the member to a polyelectrolyte membrane is usually not needed, unlike in the case of a hot melt adhesive agent.

On the other hand, the elastic member such as a fluororubber ring hardly sufficiently exhibits the sealing performance, since it usually hardly exhibits the adhesive force to a polyelectrolyte membrane.

Conversely, when a hot melt adhesive agent is used, there is an advantage of easily exhibiting the sealing performance better in the adhesive force to the polyelectrolyte membrane, while there is a likelihood of imparting thermal damage to a polyelectrolyte membrane as described above.

### SUMMARY

From the above situation, it is conventionally demanded that sealants for fuel cells are capable of adhering at nearly ordinary temperature and exhibit a high adhesive force.

In fuel cells, since the reaction spaces to be sealed are usually in a high-temperature high-humidity state due to the reaction of hydrogen and oxygen involving heat generation, it is demanded that the sealant is excellent not only in the adhesivity but in the wet heat resistance as well.

However, no sealant is conventionally found out which is excellent in the wet heat resistance and simultaneously exhibits the adhesivity at ordinary temperature to a polyelectrolyte membrane, and it is difficult to meet the demands as described above.

The present invention has been achieved in order to meet the above demands, and has an object to provide a sealant excellent in the wet heat resistance and the adhesivity at ordinary temperature.

The present invention relevant to a sealant to achieve the above object is a sealant for use in contact with a polyelectrolyte membrane of a fuel cell generating power by the reaction of hydrogen and oxygen;
the polyelectrolyte membrane is made of a perfluorocarbonsulfonic acid resin;
at least the sealant surface contacting the polyelectrolyte membrane is constituted of a resin composition containing a crystalline polyester resin as a main component;
the resin composition has a storage elastic modulus at 40°C of 2.5 MPa or more and 5 MPa or less;
the resin composition further contains an epoxy resin and an isocyanate-based crosslinking agent; and
the crystalline polyester resin is crosslinked with the isocyanate-based crosslinking agent.

Here, as one aspect of the sealant according to the present invention, a constitution can be employed, in which the resin composition further contains a noncrystalline polyester resin, and the crystalline polyester resin and the noncrystalline polyester resin are crosslinked with the isocyanate-based crosslinking agent.

As one aspect of the sealant in which the crystalline polyester resin and the noncrystalline polyester resin are crosslinked with the isocyanate-based crosslinking agent, a constitution can be employed, in which the crystalline polyester resin has a melting point lower than the softening point of the epoxy resin.

As one aspect of the sealant according to the present invention, a constitution can be employed, in which the epoxy resin contained in the resin composition contains a first epoxy resin having a softening point of 60°C or more and 90°C or less, and a second epoxy resin having a softening point of 95°C or more and 150°C or less.

Further as one aspect of the sealant according to the present invention, a constitution can be employed, in which the resin composition further contains a noncrystalline polyester resin; the crystalline polyester resin has a glass transition temperature of 0°C or less, and a melting point of 135°C or less; and the resin composition has a matrix-domain phase structure of a matrix phase containing the crystalline polyester resin and the epoxy resin and a domain phase containing the noncrystalline polyester resin.

As one aspect of the sealant having the matrix-domain phase structure, a constitution can be employed, in which the proportion of the noncrystalline polyester resin to the total of the crystalline polyester resin and the noncrystalline polyester resin is 20% by mass or more and 50% by mass or less, and the domain phase contains domains having a size in cross-sectional shape of 0.2 µm or more.

Further as one aspect of the sealant according to the present invention, a constitution can be employed, in which the crystalline polyester resin has a melting point of more than 100°C and less than 140°C.

Further as one aspect of the sealant according to the present invention, a constitution can be employed, in which the epoxy resin is contained in the resin composition in a state that the epoxy resin has unreacted epoxy groups.

Further as one aspect of the sealant according to the present invention, a constitution can be employed, in which the resin composition further contains an inorganic filler, and the resin composition contains a talc powder subjected to no surface treatment as the inorganic filler.

### DESCRIPTION OF THE DRAWINGS

FIG. 1 is a schematic plane view showing a sealant according to one embodiment;
FIG. 2 is a schematic cross-sectional view showing a state of a cross-section on arrow taken on line A-A in FIG. 1;
FIG. 3 is a schematic enlarged view illustratively showing an enlarged state of the z portion in FIG. 2;
FIG. 4 is a schematic plane view showing a shape of a sample for shearing adhesive force measurement;
FIG. 5 is a schematic front view showing a shape of the sample for shearing adhesive force measurement;
FIG. 6 is a transmission electron microscope (TEM) photograph of an adhesive sheet of Reference Example 5-1;
FIG. 7 is a microscopic Raman mapping of the adhesive sheet of Reference Example 5-1;
FIG. 8 is a TEM photograph of an adhesive sheet of Reference Example 5-3; and
FIG. 9 is a TEM photograph of an adhesive sheet of Reference Comparative Example 5-2.

### DESCRIPTION OF THE PREFERRED EMBODIMENT

Hereinafter, a preferred embodiment of the present invention will be described by taking as an example a sealant which is used to seal the periphery of a polyelectrolyte membrane of a fuel cell generating power by the reaction of hydrogen and oxygen, and also which is used in contact with a surface of the polyelectrolyte membrane made of a perfluorocarbonsulfonic acid resin.

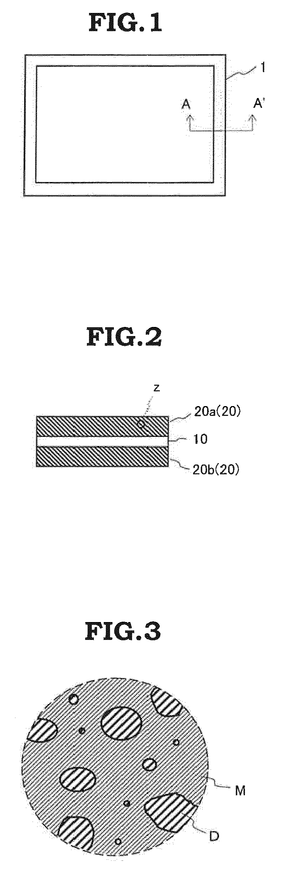

A sealant according to the present embodiment is, as shown in FIGS. 1 and 2, a sheet-shaped member whose shape in plane view is a rectangular frame. In detail, for the sealant, the contour shape of its outer edge is a rectangular frame shape having a size slightly smaller than that of a polyelectrolyte membrane.

The sealant 1 has a three-layer structure having a substrate layer 10 of a polymer sheet, an adhesive agent layer 20 provided on one surface of the substrate layer 10, and an adhesive agent layer 20 provided on the other surface of the substrate layer 10.

That is, in the sealant 1 according to the present embodiment, the one adhesive agent layer 20 functions as a sealing surface adhered to the polyelectrolyte membrane, and the adhesive agent layer 20 constituting the sealing surface is formed of a resin composition containing a crystalline polyester resin (A) as a main component.

The resin composition forming the adhesive agent layer 20 further contains, in addition to the crystalline polyester resin (A), an epoxy resin (C) and an isocyanate-based crosslinking agent (X). The crystalline polyester resin (A) is in the state of being crosslinked with the isocyanate-based crosslinking agent (X).

The resin composition may further contain a noncrystalline polyester resin (B). In the case where the resin composition has a noncrystalline polyester resin (B), the crystalline polyester resin (A) and the noncrystalline polyester resin (B) are preferably crosslinked with the isocyanate-based crosslinking agent (X).

In the case where the resin composition has a noncrystalline polyester resin (B), it is preferable that the adhesive agent layer in the present embodiment have a phase separation structure of a matrix M and a domain D formed in the interior of the adhesive agent layer as schematically shown in FIG. 3, and have the matrix phase containing the crystalline polyester resin and the epoxy resin and the domain phase containing the noncrystalline polyester resin.

In other words, the adhesive agent layer preferably has a matrix-domain phase structure in which resin particles containing the noncrystalline polyester resin are dispersed in a mixture of the crystalline polyester resin and the epoxy resin.

In the present embodiment, the crystalline polyester resin forming the matrix phase influences the adhesive force and the like by occurrence of the structural change and the like of crystal moieties under ordinary temperature, heating or wet heat.

The adhesive agent layer according to the present embodiment can exhibit a desired adhesive property by being controlled in properties of the crystalline polyester resin in the matrix phase and the noncrystalline polyester resin in the domain phase, because the adhesive agent layer does not wholly have a homogeneous system, and has a matrix-domain phase structure.

Further in the resin composition according to the present embodiment, the incorporation of the epoxy resin in the matrix phase can suppress the growth of crystals of the crystalline polyester resin and exhibits the action of stabilizing the adhesive property.

That is, the resin composition according to the present embodiment results in maintaining the good adhesivity of the crystalline polyester resin due to the presence of the epoxy resin even in the environment easily causing the structural change in the crystalline polyester resin.

On the other hand, the noncrystalline polyester resin hardly causes coarsening by wet heat as compared with the crystalline polyester resin from the structural viewpoint and also from the viewpoint of the glass transition temperature thereof, and rather develops the proper flowability, elastic modulus and tackiness.

The proper flowability, elastic modulus and tackiness are developed by the noncrystalline polyester resin, and the tendency of becoming advantageous in adhesion to an adherend is developed more remarkably in a wet heat environment than in a dry heat environment.

That is, although the noncrystalline polyester resin, since usually having a higher elastic modulus at room temperature than the crystalline polyester resin, never exhibits excellent adhesivity in an initial stage when being pasted on an adherend, the noncrystalline polyester resin changes so as to have an elastic modulus and a flowability necessary to exhibit excellent adhesivity, in a wet heat-added state.

Therefore, in a wet heat-added state, a noncrystalline polyester resin exhibits excellent adhesivity whereas a crystalline polyester resin decreases the adhesivity.

Therefore, the adhesive agent layer can prevent the infiltration of steam to the interface by the incorporation of the noncrystalline polyester resin, and results in exhibiting the excellent wet heat resistance.

Then, the domain phase causes the wet heat resistance exhibited by the adhesive agent layer to vary to some degree depending on what sizes the individual domains have.

In order to suppress the infiltration of steam into the interface, each domain forming the domain phase preferably has a size of some degree or more.

That is, in the adhesive agent layer, the domain phase preferably contains domains having a size in cross-sectional shape of 0.2 µm or more and 30 µm or less, preferably 0.3 µm or more and 28 µm or less, and more preferably 1 µm or more and 25 µm or less, and preferably has a plurality of domains having a size in cross-sectional shape of 0.2 µm or more.

Here, the size in cross-sectional shape of a domain particle in the present description means an equivalent circle diameter; and whether or not the cross-sectional shape has a size of 0.2 µm or more can be checked, for example, by cutting the adhesive agent layer in the thickness direction to fabricate a sliced piece, and directly observing the sliced piece by a transmission electron microscope (TEM).

That is, a TEM photograph of the sliced piece is taken at a predetermined magnification; a cross-sectional area of each domain is determined from the TEM photograph; and if there are apparently present domains whose cross-sectional area is equal to or more than the area of a circle of 0.2 µm in diameter, the adhesive agent layer is judged to contain domains having a cross-sectional area of 0.2 µm in diameter.

In the case where a crystalline polyester resin and the like are included in a domain particle to form a multiphase separation structure called a "sea-island-lake structure" or the like in an adhesive agent layer, the area of the "lake" portion (a matrix phase component particle in the domain) in the size in cross-sectional shape of the domain is neglected in the size consideration.

The formation of a domain phase in the above form in an adhesive agent layer is preferable from the viewpoint of making the adhesive agent layer exhibit the excellent wet heat resistance. Further the crystalline polyester resin is preferably contained together with an epoxy resin in the matrix phase in order to making an adhesive agent layer exhibit an excellent initial adhesive force.

That is, if the matrix-domain became in a reversed state, it would become difficult for an adhesive agent layer to exhibit the excellent initial adhesive force and the wet heat resistance.

Thus in order to more surely enable the crystalline polyester resin to be a component of the matrix phase side and the noncrystalline polyester resin to be a component of the domain phase side, and to more surely form domains having a size in cross-sectional shape of 0.2 µm or more, the proportion of the noncrystalline polyester resin in the total of the crystalline polyester resin and the noncrystalline polyester resin is made to be preferably 5% by mass or more and 50% by mass or less, and especially preferably 20% by mass or more and 50% by mass or less.

Further the proportion of the noncrystalline polyester resin in all polymers contained to make the adhesive agent layer exhibit the adhesivity, including the epoxy resin, is preferably 4% by mass or more and 50% by mass or less, and especially preferably 20% by mass or more and 40% by mass or less.

If the size of the domain phase in the matrix-domain phase structure is too small, the properties of the noncrystalline polyester resin improving the adhesivity in a wet heat environment hardly becomes reflected in the whole of the adhesive agent layer; and if the size of the domain phase is too large, the properties of the noncrystalline polyester resin being poor in the adhesivity at room temperature is likely to be reflected in the whole of the adhesive agent layer.

Hereinafter, each component to form a sealant will be described in more detail.

### (A) The crystalline polyester resin

As the crystalline polyester resin in the present embodiment, a crystalline polyester resin can be employed which is obtained by dehydration condensation of a polyvalent carboxylic acid(s) (a1) and a polyol(s) (a2).

Whereas polyester resins usually called noncrystalline polyester resins are suppressed in development of the crystallinity by employing a plurality of kinds of either one of a polyvalent carboxylic acid(s) (a1) and a polyol(s) (a2) or pluralities of kinds of the both, and are regulated, for example, such that the differential scanning calorimetry (DSC) analysis indicates no clear crystallization peak nor crystal melting peak, the crystalline polyester resin is synthesized by selecting a polyvalent carboxylic acid(s) (a1) and a polyol(s) (a2) such that the DSC analysis clearly indicates a crystallization peak and a crystal melting peak.

Therefore, in the case where there is a necessity of distinguishing whether a polyester resin is a crystalline polyester resin or a noncrystalline polyester resin, it suffices to check whether or not the DSC analysis clearly indicates a crystallization peak and a crystal melting peak.

### (a1) The polyvalent carboxylic acid

Examples of the polyvalent carboxylic acid constituting the crystalline polyester resin include aromatic dicarboxylic acids such as terephthalic acid, isophthalic acid, orthophthalic acid, 1,4-naphthalenedicarboxylic acid, 1,5-naphthalenedicarboxylic acid, 2,6-naphthalenedicarboxylic acid, 2,7-naphthalenedicarboxylic acid and biphenyldicarboxylic acid; aromatic oxycarboxylic acids such as p-oxybenzoic acid and p-(hydroxyethoxy)benzoic acid; saturated aliphatic dicarboxylic acids such as succinic acid, adipic acid, azelaic acid, sebacic acid and dodecanedicarboxylic acid; unsaturated aliphatic dicarboxylic acids such as fumaric acid, maleic acid and itaconic acid; unsaturated alicyclic dicarboxylic acids such as tetrahydrophthalic acid; alicyclic dicarboxylic acids such as hexahydrophthalic acid, 1,2-cyclohexanedicarboxylic acid, 1,3-cyclohexanedicarboxylic acid and 1,4-cyclohexanedicarboxylic acid; and tricarboxylic acids such as trimellitic acid, trimesic acid and pyromellitic acid.

### (a2) The polyol

Examples of the polyol constituting the crystalline polyester resin include aliphatic glycols such as ethylene glycol, 1,2-propanediol, 1,3-propanediol, 1,2-butanediol, 1,3-butanediol, 1,4-butanediol, 2,3-butanediol, 1,5-pentanediol, 1,6-hexanediol, neopentylglycol, 3-methyl-1,5-pentanediol and 2-butyl-2-ethyl-1,3-propanediol; oligoalkylene glycols such as diethylene glycol, triethylene glycol and dipropylene glycol; alicyclic glycols such as 1,2-cyclohexanedimethanol, 1,3-cyclohexanedimethanol and 1,4-cyclohexanedimethanol; polyalkylene ether glycols such as polyethylene glycol, polypropylene glycol and polytetramethylene glycol; triols such as trimethylolethane, trimethylolpropane, glycerol and pentaerythritol; and ethylene oxide adducts and propylene oxide adducts of bisphenol A, and ethylene oxide adducts and propylene oxide adducts of hydrogenated bisphenol A.

It is conceivable that crystalline polyester resins are hardly susceptible to the attack by water to molecular chains and hardly cause the deterioration due to hydrolysis and the like in crystal regions thereof as compared with in amorphous regions thereof.

Therefore, the crystalline polyester resin having a higher melting point and a higher degree of crystallization is more advantageous in that an adhesive agent layer 20 can be made excellent in the wet heat resistance.

On the other hand, if a crystalline polyester resin having an excessively high degree of crystallization and a high melting point as a main component of the resin composition forming the adhesive agent layer 20 is used, the resin composition can hardly be made to be excellent in the adhesivity at ordinary temperature.

Therefore, the crystalline polyester resin has a melting point of preferably more than 90°C and less than 150°C, more preferably more than 100°C and less than 140°C, and especially preferably more than 105°C and less than 130°C, in that the adhesive agent layer 20 can be made to have both of the excellent wet heat resistance and the excellent adhesivity at ordinary temperature.

Further the crystalline polyester resin has a glass transition temperature (hereinafter, also referred to as "Tg") preferably in the range of -100°C or more and 30°C or less, and especially, more preferably in the range of -80°C or more and -20°C or less.

In the case where a sealant has a matrix-domain phase structure, the crystalline polyester resin preferably has a glass transition temperature of 0°C or less, and a melting point of 135°C or less.

Employment of a crystalline polyester resin having a Tg in the above range as a main component of the resin composition enables to make an adhesive agent layer 20 more exhibit the rubber elasticity and to allow the adhesive agent layer 20 to be improved in the cohesive force and exhibit excellent adhesivity, as compared with the case of using a crystalline polyester resin having a Tg out of the above range.

Setting Tg of a crystalline polyester resin to be 30°C or less enables to form an adhesive agent layer 20 excellent in the cold resistance.

Use of a crystalline polyester resin having a Tg of 30°C or less as a main component of an adhesive agent layer 20 enables to make the adhesive property at ordinary temperature of the adhesive agent layer 20 good.

In the case where such a suitable crystalline polyester resin is contained in an adhesive agent layer of a sealant, when the periphery of a polyelectrolyte membrane of a fuel cell is sealed with the sealant, secure sealing can be carried out while a likelihood of thermally damaging the polyelectrolyte membrane is being suppressed.

Employment of a crystalline polyester resin having a Tg of -100°C or more as a main component of the resin composition enables to restrain the adhesive agent layer 20 from becoming excessively flexible or soft.

Moreover, employing a crystalline polyester resin as described above, since enabling to restrain the softening temperature for the whole of a resin composition from becoming excessively low, enables the adhesive agent layer to exhibit a high adhesive strength in the time of ordinary temperature in suspension of the operation of a fuel cell and even in a heated situation during the operation of the fuel cell.

Here, the melting point and the glass transition temperature (Tg) can be measured, for example, using a DSC analyzer.

More specifically, the melting point and the glass transition temperature can be determined from a DSC curve acquired when a sample (crystalline polyester resin) is heated at a temperature-rise rate of 5°C/min from a temperature 30 K or more lower than an estimated melting point and glass transition temperature thereof to a temperature 30 K or more higher than that under the nitrogen gas flow.

The glass transition temperature (Tg) can be determined as a middle-point glass transition temperature (Tmg) based on a method described in JIS K7121: 1987 "Measuring methods for transition temperatures of plastics".

The melting point also can be determined as a melting peak (Tpm) based on a method described in the JIS Standard.

The crystalline polyester resin preferably has a number-average molecular weight of 10,000 to 50,000.

The reason that it is preferable that the crystalline polyester resin as a main component of the resin composition has such a molecular weight is that setting the molecular weight of the crystalline polyester resin to be 10,000 or more enables to restrain an adhesive agent layer 20 from posing a likelihood of becoming brittle and makes the adhesive agent layer 20 exhibit excellent toughness.

On the other hand, employing a crystalline polyester resin having a number-average molecular weight of 50,000 or less enables to make the adhesive agent layer 20 excellent in the adhesivity at ordinary temperature.

That is, employing such a crystalline polyester resin enables a sealant to pose only a low likelihood of thermally damaging a polyelectrolyte membrane of a fuel cell and to enable the sealant to exhibit excellent sealability.

The number-average molecular weight of a crystalline polyester resin can be determined in terms of styrene by gel permeation chromatography (GPC).

As the crystalline polyester resin exhibiting the properties as described above, crystalline polyester resins are suitable which are obtained by reacting terephthalic acid, isophthalic acid, butanediol and polyoxytetramethylene glycol.

Among these, a crystalline polyester resin is preferable which is constituted of a proportion of 25 to 40 mol% of terephthalic acid, 10 to 20 mol% of isophthalic acid, 35 to 50 mol% of butanediol, and 5 to 15 mol% of polyoxytetramethylene glycol whose average repeating number is 10 to 20.

### (B) The noncrystalline polyester resin

The noncrystalline polyester resin is a polyester resin indicating no clear crystallization or crystal melting peak in the DSC measurement. As the noncrystalline polyester resin, a noncrystalline polyester resin can be employed which is obtained by dehydration condensation of a polyvalent carboxylic acid(s) (a1) and a polyol(s) (a2) similarly to the crystalline polyester resin, and can be employed which is made to develop no crystallinity by employing a plurality of kinds of either one of polyvalent carboxylic acid(s) (a1) and polyol(s) (a2) or pluralities of kinds of the both.

A resin composition according to the present embodiment is preferably blended with a noncrystalline polyester resin in order to develop functions of increasing the cohesive force and also regulating the rubber elasticity of a crystalline polyester resin.

That is, in the present embodiment, blending the resin composition with a noncrystalline polyester resin regulates the flexibility (hardness) of the resin composition and thereby exhibits an effect of preventing the resin composition from peeling from an adherend member.

For example, in the case where a sealant according to the present embodiment is utilized as a sealant of a fuel cell, and in the case where the sealant is imparted with a stress due to occurrence of a thermal expansion difference between a member contacting one surface side of the sealant and a member contacting the other surface side in the operation of the fuel cell, a suitable stress relaxation is caused in the resin composition to thereby allow preventing the sealant from peeling from the adherend members.

The noncrystalline polyester resin in the present embodiment has a Tg preferably in the range of 50°C or more and 100°C or less, and especially preferably in the range of 60°C or more and 75°C or less.

The reason that Tg of the noncrystalline polyester resin is preferably 50°C or more and especially preferably 60°C or more is that the tackiness cannot be developed in an usual storage condition, and because likelihood in which dusts and the like are attached on portions where the resin composition exposes to deteriorate the appearance, and problems such as blocking are caused can be reduced to thereby allow imparting good handleability.

On the other hand, the reason that Tg of the noncrystalline polyester resin is preferably 100°C or less and especially preferably 75°C or less is that the softening point of the resin composition is prevented from becoming high and the viscosity thereof in a melt state is prevented from becoming too high, and the adhesion condition including the adhesion temperature can be restrained from being limited to high temperatures.

That is, the incorporation of a noncrystalline polyester resin having a Tg of 100°C or less in the resin composition enables the sealant according to the present embodiment to be excellent in the adhesive workability and excellent in the sealability.

The noncrystalline polyester resin used for the resin composition according to the present embodiment preferably has a number-average molecular weight of 15,000 to 35,000.

A noncrystalline polyester resin having a number-average molecular weight of 15,000 or more can impart excellent toughness to the resin composition, and enables to make the resin composition excellent in the cohesive force and the adhesive strength.

By contrast, a noncrystalline polyester resin having a number-average molecular weight of 35,000 or less enables to restrain the temperature, for example, when the resin composition is adhered, from being limited to high temperatures.

As the noncrystalline polyester resin exhibiting the properties as described above, noncrystalline polyester resins are suitable which are obtained by reacting terephthalic acid, isophthalic acid, ethylene glycol, neopentyl glycol and diethylene glycol.

Among these, a noncrystalline polyester resin is preferable which is constituted of a proportion of 20 to 30 mol% of terephthalic acid, 20 to 25 mol% of isophthalic acid, 20 to 30 mol% of ethylene glycol, 20 to 30 mol% of neopentyl glycol and 0.1 to 5 mol% of diethylene glycol.

The blend proportion of the crystalline polyester resin (A) and the noncrystalline polyester resin (B) is not especially limited, but these polyester resins are contained in the resin composition in a mass ratio (A:B) of preferably 50:50 to 90:10, and especially preferably 70:30 to 80:20.

The reason that the blend proportion of the crystalline polyester resin and the noncrystalline polyester resin is preferably made to be in the above range is that if the amount of blend of the noncrystalline polyester resin to the crystalline polyester resin is too small, the effect by the blend is hardly developed, and by contrast, because if the noncrystalline polyester resin is blended excessively, the elasticity of the crystalline polyester resin is hardly developed in the resin composition, which has a likelihood of hardly making the resin composition exhibit an excellent adhesive force and toughness.

### (C) The epoxy resin

Examples of the epoxy resin in the present embodiment include bisphenol A epoxy resins, bisphenol F epoxy resins, cresol novolac epoxy resins, alicyclic epoxy resins, and phenol novolac epoxy resins.

The epoxy resin is an effective component to make a resin composition forming the adhesive agent layer 20 exhibit the tackiness.

The epoxy resin preferably has a softening point of 135°C or more and 150°C or less. The softening point of the epoxy resin is preferably higher than the melting point (Tm) of the crystalline polyester resin, more preferably (Tm+5°C) to (Tm+40°C), and still more preferably (Tm+10°C) to (Tm+30°C).

The epoxy resin is preferably bisphenol A epoxy resins in that these are effective to impart the tackiness and the toughness, and the excellent wet heat resistance to the resin composition; and among these, bisphenol A epoxy resins are preferable which have a softening point of 130°C or more and 150°C or less as determined by the ring and ball method according to JIS K 7234.

The epoxy resin preferably has a molecular weight of 3,000 to 5,000, and an epoxy equivalent of 2,000 to 3,500 g/eq as determined according to JIS K 7236.

The crystalline polyester resin is preferably contained in a proportion of preferably 50% by mass or more, more preferably 60% by mass or more, and especially preferably 70% by mass or more, in the resin composition; and the epoxy resin is contained, when the amount of the crystalline polyester resin is taken to be 100 parts by mass, preferably so as to become 15 parts by mass or more and 50 parts by mass or less in the resin composition, and more preferably so as to become 20 parts by mass or more and 30 parts by mass or less therein.

By incorporating the epoxy resin in a resin composition so as not to allow ring-opening at least a part of epoxy groups, when a crystalline polyester resin is hydrolyzed to thereby become short-chain ones having hydroxyl groups and carboxyl groups at molecular terminals, the epoxy groups are allowed to react therewith to be thereby able to again make long-chain ones.

Therefore, it is preferable that the adhesive agent layer 20 according to the present embodiment contains the epoxy resin in the state that at least a part of epoxy groups is unreacted, in that decreases in physical properties such as adhesive force and tensile strength due to the wet heat deterioration of the resin composition used for the formation can be suppressed by the presence of the epoxy groups.

The remaining of epoxy groups without being ring-opened can be checked by using a Fourier transform infrared spectrometer (FTIR), and specifically, the remaining thereof can be checked by the emergence of a peak at 925 to 899 cm⁻¹, which indicates the presence of an epoxy group.

If checking whether a peak emerging at 925 to 899 cm⁻¹ is originated from an epoxy group is necessary, the checking can be made by again carrying out the measurement using FTIR after the resin composition is heated to a temperature equal to or more than the softening point of the epoxy resin, and the peak can be confirmed to be originated from an epoxy group by using related changes of the peak height and a peak height originated from a hydroxyl group and emerging at 3,650 to 3,140 cm⁻¹.

The resin composition preferably contains as the epoxy resin (C) a first epoxy resin (C1) having a softening point of 60°C or more and 90°C or less, and a second epoxy resin (C2) having a softening point of 95°C or more and 150°C or less.

The epoxy resin is a component effective to make a resin composition exhibit the tackiness, and in the present embodiment, two kinds of the epoxy resins having different softening points are preferably contained in the resin composition so that the resin composition can be made to exhibit excellent low-temperature adhesivity and also to exhibit excellent adhesivity in a broad temperature region.

### (The first epoxy resin (C1))

The first epoxy resin (C1) having a softening point of 60°C or more and 90°C or less is preferably a bisphenol A epoxy resin in that this epoxy resin is effective to impart the tackiness and the toughness to the resin composition and impart excellent wet heat resistance thereto.

The softening point of an epoxy resin in the present description means a softening point determined by the ring and ball method according to JIS K 7234 unless otherwise specified.

The first epoxy resin is preferably a bisphenol A epoxy resin having a molecular weight of 800 to 2,000, and especially preferably a bisphenol A epoxy resin having a molecular weight of 1,000 to 1,500.

Further the first epoxy resin has preferably an epoxy equivalent of 500 to 900 g/eq, and especially preferably 650 to 800 g/eq, as determined according to JIS K 7236.

### (The second epoxy resin (C2))

Also the second epoxy resin having a softening point of 95°C or more and 150°C or less is preferably a bisphenol A epoxy resin in that this epoxy resin is effective to impart the tackiness and the toughness to the resin composition and impart excellent wet heat resistance thereto.

The second epoxy resin is preferably employed which has a softening point lower than the melting point of the crystalline polyester resin.

In other words, the crystalline polyester resin preferably has a melting point higher than the softening point of the second epoxy resin.

Then, in the case of employing as the crystalline polyester resin a crystalline polyester resin having a melting point of 100°C or more and 120°C or less, it is especially preferable to employ, as the second epoxy resin, a second epoxy resin having a softening point of 95°C or more and less than 100°C.

The second epoxy resin is preferably a bisphenol A epoxy resin having a molecular weight of 1,000 to 2,000, and especially preferably a bisphenol A epoxy resin having a molecular weight of 1,500 to 1,800.

Further the second epoxy resin has preferably an epoxy equivalent of 800 to 1,100 g/eq, and especially preferably 850 to 1,000 g/eq, as determined according to JIS K 7236.

With respect to the first epoxy resin and the second epoxy resin, the first epoxy resin is preferably contained in a larger amount in a mass proportion in the resin composition than the second epoxy resin.

More specifically, if the mass proportion of the first epoxy resin in the resin composition is taken to be P1 (%), and the mass proportion of the second epoxy resin therein is taken to be P2 (%), the first epoxy resin and the second epoxy resin are preferably contained in the resin composition so that the ratio (P1/P2) thereof becomes 1.1 to 2.0.

The epoxy resin is contained in a resin composition preferably so that if the amount of a crystalline polyester resin is taken to be 100 parts by mass, a first epoxy resin is 10 parts by mass or more and 20 parts by mass or less, and a second epoxy resin is 5 parts by mass or more and 15 parts by mass or less.

Further the total of the first epoxy resin and the second epoxy resin is contained in the resin composition preferably so as to be 15 parts by mass or more and 35 parts by mass or less, and especially preferably so as to be 20 parts by mass or more and 30 parts by mass or less, with respect to 100 parts by mass of the crystalline polyester resin.

Conventional resin compositions are likely to have short lifetime, including the cases where particularly in joining of metal members and the like, the interface with an adhesive agent using the resin composition is largely influenced by moisture in a high-temperature high-humidity atmosphere due to the polarity and the magnitude of the thermal expansion of the metals; and in a usage environment having a vigorous temperature change as seen in fuel cells, a repeating shearing force is generated at the adhesive interface due to the difference in expansion coefficient between the adhesive agent and an adherend, and the adhesive force decreases due to the fatigue.

By contrast, the resin composition according to the present embodiment, since containing an epoxy resin together with a crystalline polyester resin as described above, is improved in the wet heat resistance performance of the resin composition as compared with the conventional resin compositions.

### (X) The isocyanate-based crosslinking agent

As the isocyanate-based crosslinking agent, an isocyanate-based crosslinking agent having a reactivity with a polar group such as a hydroxyl group of a crystalline polyester resin can be used, and examples thereof include aliphatic isocyanates such as hexamethylene diisocyanate (HDI), isophorone diisocyanate (IPDI), xylylene diisocyanate (XDI), and aromatic isocyanates such as tolylene diisocyanate (TDI), diphenylmethane diisocyanate (MDI) and tolidine diisocyanate (TODI).

The isocyanate-based crosslinking agent contained in the resin composition is preferably xylylene diisocyanate, and the blend proportion of the isocyanate-based crosslinking agent is preferably 1 part by mass or more and 12 parts by mass or less, and especially preferably 2 parts by mass or more and 8 parts by mass or less, with respect to 100 parts by mass of the crystalline polyester resin.

### (Z) Other components

In the resin composition according to the present embodiment, resin components other than a crystalline polyester resin and an epoxy resin as described above can be contained in the range of not remarkably damaging the advantage of the present invention; and for example, in the case where further adhesivity at ordinary temperature is demanded, a tackifier such as a terpene-based resin can be added.

Additionally, common plastic blending ingredients such as antiaging agents, antioxidants, flame retardants, fillers, colorants and processing aids can suitably be contained in the range of not damaging the advantage of the present invention.

Above all, the incorporation of inorganic fillers such as platy mineral particles is preferable in order to improve the cohesive force of the resin composition and also improve the steam barrier properties and gas barrier properties thereof.

Particularly a talc powder having an average particle diameter (median diameter by a laser diffraction method) of 1 to 10 µm is suitable in the point of being inexpensively available.

The talc powder contained in the resin composition may be a talc powder surface-treated with a fatty acid or a silane coupling agent, but use of a talc powder subjected to no surface treatment is preferable in order to improve the cohesive force of the resin composition by utilizing functional groups on the surface thereof.

In the case where the talc powder is contained in the resin composition, the talc powder is contained preferably in a proportion of 10 parts by mass or more and 50 parts by mass or less, and preferably 20 parts by mass or more and 30 parts by mass or less, with respect to 100 parts by mass of a crystalline polyester resin.

In the sealant according to the present embodiment, an adhesive agent layer 20 (hereinafter, also referred to as "a first adhesive agent layer 20a") formed on one surface side of the substrate layer 10 and an adhesive agent layer 20 (hereinafter, also referred to as "a second adhesive agent layer 20b") formed on the other surface side thereof do not need to be formed of the same resin composition; and the first adhesive agent layer 20a and the second adhesive agent layer 20b may be formed of resin compositions different in blending content.

Further the first adhesive agent layer 20a and the second adhesive agent layer 20b may be usually made to have a thickness of 10 µm or more and 200 µm or less, and may have the same thickness or different thicknesses.

The adhesive agent layer 20, if having a too low storage elastic modulus, hardly exhibits the adhesive force at ordinary temperature, and by contrast, if having too high storage elastic modulus, again hardly exhibits the adhesive force as a result of making the tight adhesivity to a polyelectrolyte membrane insufficient.

Therefore, it is an important factor that the adhesive agent layer 20 at least on the side contacting the polyelectrolyte membrane has a storage elastic modulus (G') at 40°C of 2.5 MPa or more and 5 MPa or less in order to be capable of exhibiting the excellent adhesivity at ordinary temperature (for example, 23°C) to the polyelectrolyte membrane.

The storage elastic modulus is determined by a measurement using the following condition.

### <Measurement condition of the storage elastic modulus (G')>

- Instrument to be used: made by TA Instruments Japan Inc., trade name: "ARES-2KFRT"
- Measurement mode: temperature-dependent test of the dynamic viscoelasticity, using 8-mm parallel plates
- Measurement temperature range: 30°C to 200°C
- Temperature-rise rate: 10°C/min
- Oscillation frequency; 1 Hz
- Strain: 0.5%

The sealant according to the present embodiment preferably exhibits a peeling strength of 3 N/10 mm to a perfluorocarbonsulfonic acid resin-made polyelectrolyte membrane.

Here, whether or not the sealant has a peeling strength of 3 N/10 mm or more can be judged by measuring a peeling strength of the sealant by a method described in Examples.

The substrate layer 10 carrying such adhesive agent layers 20 on both surfaces thereof can be usually constituted of a film-shaped sheet composed of a resin good in the affinity for the resin composition or a fiber sheet composed of the resin.

Above all, films and nonwoven fabrics composed of a polyethylene terephthalate resin or a polyethylene naphthalate resin and having a thickness of 10 µm or more and 200 µm or less are suitable as a constituting material of the substrate layer 10.

Not only such a polyester-based resin sheet but also a polymer sheet composed of another resin such as a polyamide resin or a polyimide resin, or of a polymer such as a silicone rubber or a fluororubber may be used as a constituting material of the substrate layer 10.

A laminate sheet obtained by laminating different materials may further be employed as a forming material of the substrate layer 10.

The sealant according to the present embodiment can be formed for example, by melting and kneading blending ingredients to form a resin composition, such as a crystalline polyester resin, a noncrystalline polyester resin, an epoxy resin, an isocyanate-based crosslinking agent, and an inorganic filler, at a temperature equal to or higher than the melting point of the crystalline polyester resin, and as required, adding an organic solvent, to thereby prepare a coating liquid, and applying the coating liquid on both surfaces of a polymer sheet.

The crosslinking of the polyester resins can be carried out by heating the blending ingredients when the coating liquid is prepared to thereby allow hydroxyl groups of the polyester resins and isocyanate groups of the crosslinking agent to react.

Here, examples of a perfluorocarbonsulfonic acid resin-made polyelectrolyte membrane to be sealed with the sealant according to the present embodiment include polyelectrolyte membranes using "Nafion" by trade name made by Du Pont, using "Flemion" by trade name made by Asahi Kasei Corp., and using "Aciplex" by trade name made by Asahi Glass Co., Ltd., as the perfluorocarbonsulfonic acid resin

The perfluorocarbonsulfonic acid resin is, for example, a resin having a polymer structure represented by the following formula (1).

m, n and x in the formula (1) represent: for example, in the "Nafion", m≥1, n=2 and x=5 to 13.5; in the "Aciplex", m=0, 1, n=2 to 5 and x=1.5 to 14; and in the "Flemion", m=0, 1 and n=1 to 5.

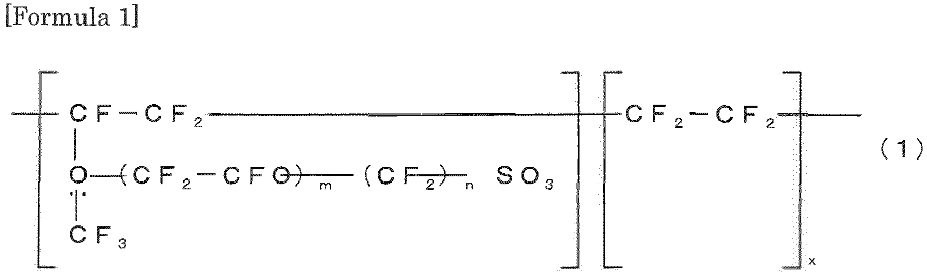

The sealant according to the present embodiment comprises a resin composition providing the adhesive agent layer with a predetermined elastic modulus. The resin composition contains a crystalline polyester resin as a main component, and further contains an epoxy resin and an isocyanate-based crosslinking agent. The sealant according to the present embodiment contains the crystalline polyester resin in a crosslinked state with the isocyanate-based crosslinking agent. Therefore, the sealant according to the present embodiment results in exhibiting the wet heat resistance and adhesivity at ordinary temperature excellent to a perfluorocarbonsulfonic acid resin-made polyelectrolyte membrane as described above.

In the sealant according to the present embodiment, the resin composition further contains a noncrystalline polyester resin. The crystalline polyester resin and the noncrystalline polyester resin are crosslinked with the isocyanate-based crosslinking agent. Therefore, the sealant according to the present embodiment has an advantage of being excellent in the wet heat resistance. The crystalline polyester resin has a melting point lower than the softening point of the epoxy resin. Therefore, the sealant according to the present embodiment enables epoxy groups originated from the epoxy resin to be much present. Thereby, the sealant according to the present embodiment has an advantage of being better in the wet heat resistance.

Further in the resin composition, the epoxy resin contains a first epoxy resin having a softening point of 60°C or more and 90°C or less, and a second epoxy resin having a softening point of 95°C or more and 150°C or less. Therefore, the sealant according to the present embodiment has an advantage of being excellent in the wet heat resistance and the low-temperature adhesivity.

The resin composition further contains a noncrystalline polyester resin. The crystalline polyester resin has a glass transition temperature of 0°C or less, and a melting point of 135°C or less. The sealant according to the present embodiment has a matrix-domain phase structure of a matrix phase containing the crystalline polyester resin and the epoxy resin and a domain phase containing the noncrystalline polyester resin. Therefore, the sealant according to the present embodiment has an advantage of being excellent in the initial adhesivity and the wet heat resistance.

From the above, the sealant according to the present embodiment is used in contact with a polyelectrolyte membrane of a fuel cell generating power by the reaction of hydrogen and oxygen. The polyelectrolyte membrane is made of a perfluorocarbonsulfonic acid resin. At least the surface of the sealant contacting the polyelectrolyte membrane is constituted of the resin composition containing the crystalline polyester resin as a main component. The resin composition has a storage elastic modulus at 40°C of 2.5 MPa or more and 5 MPa or less. The resin composition further contains an epoxy resin and an isocyanate-based crosslinking agent. The crystalline polyester resin is crosslinked with the isocyanate-based crosslinking agent.

As a result of intensive studies, the present inventors have found that a specific resin composition exhibits excellent adhesivity at ordinary temperature and excellent wet heat resistance to a perfluorocarbonsulfonic acid resin-made polyelectrolyte membrane broadly utilized as a polyelectrolyte membrane of fuel cells, and this finding has led to the completion of such a sealant. According to the present embodiment, a sealant for a fuel cell excellent in the wet heat resistance and the adhesivity at ordinary temperature can be provided.

In the sealant according to the present embodiment, the resin composition preferably further contains a noncrystalline polyester resin. The crystalline polyester resin and the noncrystalline polyester resin are crosslinked with the isocyanate-based crosslinking agent.

As a result of intensive studies, the present inventors have found that by crosslinking a resin composition containing a crystalline polyester resin, a noncrystalline polyester resin and an epoxy resin with a predetermined crosslinking agent, the resin composition can be made to be excellent in the wet heat resistance, and this finding has led to the completion of such a sealant. According to the present embodiment, a resin composition excellent in the wet heat resistance can be provided, and a sealant for a fuel cell excellent in the reliability in the sealing performance can be provided.

Further in the sealant according to the present embodiment, the crystalline polyester resin more preferably has a melting point lower than the softening point of the epoxy resin.

As a result of intensive studies, the present inventors have found that by crosslinking a resin composition containing a crystalline polyester resin, a noncrystalline polyester resin and an epoxy resin with a predetermined crosslinking agent, the resin composition can be made to be excellent in the wet heat resistance, and this finding has led to the completion of such a sealant. According to the present embodiment, a resin composition excellent in the wet heat resistance can be provided, and a sealant for a fuel cell excellent in the reliability to the sealing performance can be provided.

Further in the sealant according to the present embodiment, the epoxy resin contained in the resin composition preferably contains a first epoxy resin having a softening point of 60°C or more and 90°C or less, and a second epoxy resin having a softening point of 95°C or more and 150°C or less.

As a result of intensive studies, the present inventors have found that making a resin composition contain a crystalline polyester resin by crosslinking the crystalline polyester resin with a predetermined crosslinking agent, and making the resin composition contain a predetermined epoxy resin can make the resin composition excellent in the wet heat resistance and the low-temperature adhesivity, and this finding has led to the completion of such a sealant. According to the present embodiment, a resin composition excellent in the wet heat resistance and the low-temperature adhesivity can be provided, and a sealant for a fuel cell excellent in the reliability in the sealing performance and good in the sealing workability can be provided.

Further in the sealant according to the present embodiment, the resin composition preferably further contains a noncrystalline polyester resin. The crystalline polyester resin has a glass transition temperature of 0°C or less, and a melting point of 135°C or less. The sealant according to the present embodiment has a matrix-domain phase structure containing a matrix phase containing the crystalline polyester resin and the epoxy resin and a domain phase containing the noncrystalline polyester resin.

According to the present embodiment, the sealant can be made to be excellent in the initial adhesivity and wet heat deterioration resistance.

Further in the sealant according to the present embodiment, the proportion of the noncrystalline polyester resin in the total of the crystalline polyester resin and the noncrystalline polyester resin is more preferably 20% by mass or more and 50% by mass or less, and the domain phase contains domains having a size in cross-sectional shape of 0.2 µm or more.

Further in the sealant according to the present embodiment, the crystalline polyester resin preferably has a melting point of more than 100°C and less than 140°C.

Further in the sealant according to the present embodiment, the epoxy resin is contained in the resin composition preferably in a state of having unreacted epoxy groups.

Further in the sealant according to the present embodiment, the resin composition preferably further contains an inorganic filler, and contains a talc powder subjected to no surface treatment as the inorganic filler.

The sealant according to the present embodiment does not necessarily need to be adhered to a polyelectrolyte membrane at ordinary temperature when sealing is carried out, and may be adhered to the polyelectrolyte membrane for example, by heating the sealant to a temperature less than the melting point of the crystalline polyester resin.

In the present embodiment, a sealant is exemplified which has a three-layer structure of an adhesive agent layer/a substrate layer/an adhesive agent layer, but the sealant according to the present invention may have a two-layer structure of a substrate layer and an adhesive agent layer, or a single-layer structure of an adhesive agent layer alone.

The sealant according to the present invention is not limited to the above embodiment. The action and effect of the sealant according to the present invention is not limited to the above action and effect. The sealant according to the present invention may be variously modified and changed without departing from the gist of the present invention.

### [Examples]

The present invention will be described in more detail by way of Examples, Comparative Examples, Reference Examples and Reference Comparative Examples, but the present invention is not limited thereto.

### (Test 1)

First, Test 1 will be described.

### (Materials)

Materials used for the evaluation and details thereof are shown below.

### (A Crystalline polyester resins)

### (A1-1): a crystalline polyester resin of:

a number-average molecular weight of 30,000;
a glass transition temperature (Tg) of -60°C; and
a melting point (Tm) of 107°C

### (A1-2): a crystalline polyester resin of:

a number-average molecular weight of 35,000;
a glass transition temperature (Tg) of -70°C; and
a melting point (Tm) of 126°C

### (A1-3): a crystalline polyester resin of:

a number-average molecular weight of 35,000;
a glass transition temperature (Tg) of 8°C; and
a melting point (Tm) of 138°C

### (A1-4) a crystalline polyester resin of:

a number-average molecular weight of 35,000;
a glass transition temperature (Tg) of -14°C; and
a melting point (Tm) of 100°C

### (C Epoxy resins)

### (C1-1): a bisphenolAepoxy resin of:

a number-average molecular weight (epoxy equivalent) of about 1,300 (670 to 770 g/eq); and
a softening point (Ts) of 89°C

### (C1-2): a bisphenol A epoxy resin of:

a number-average molecular weight (epoxy equivalent) of about 1,650 (875 to 975 g/eq); and
a softening point (Ts) of 97°C

### (C1-3): a bisphenol A epoxy resin of:

a number-average molecular weight (epoxy equivalent) of about 3,800 (2,400 to 3,300 g/eq); and
a softening point (Ts) of 144°C

### (X An isocyanate-based crosslinking agent)

(X1-1): xylylene diisocyanate

### (Z Another additive)

(Z1-1): a talc powder

### (Example 1)

A resin composition containing the crystalline polyester resin (A1-1), the epoxy resins (C1-1, C1-2), the isocyanate-based crosslinking agent (X1-1) and the talc powder (Z1-1) in a proportion shown in the following Table 1 was formed as an adhesive layer of 20 µm in thickness on one surface of a polyethylene terephthalate (PET) film of 25 µm in thickness to thereby fabricate a sheet sample.

### (Evaluation of the adhesive force at ordinary temperature: a fabrication method and the evaluation of samples)

A strip specimen of 10 mm wide x 200 mm long was cut out for a peeling test from the sheet sample.

A platy specimen which was prepared by laminating a perfluorocarbonsulfonic acid resin sheet (trade name: "Nafion115CS") on one surface of a hard plate, and had nearly the same size as the strip specimen was prepared.

The platy specimen and the strip specimen were overlapped so that the perfluorocarbonsulfonic acid resin sheet surface of the platy specimen and the adhesive layer-formed surface of the strip specimen were brought into contact. Then, the overlapped specimen was fed to and passed through a rubber roller rotating at a periphery speed of 0.5 / in and at 25°C so that the longitudinal direction of the specimen became the movement direction.

The pressure (line pressure) of the rubber roller at this time was set at 51.2 MPa/cm.

The above lamination was carried out so as to make an adhesive section of the both from one end side to about 40 mm in the longitudinal direction. In the remaining section of about 160 mm, the lamination was carried out so that the strip specimen and the platy specimen were not adhered.

Then, the strip specimen and the platy specimen on the unadhered sides were chucked, respectively, in the upper and lower chucks of a tensile tester, and were subjected to a 180°-peeling test to thereby determine an average value of the tensile stress (N/cm) and evaluate the sample as an "adhesive force at ordinary temperature".

### (Test of the hot water adhesion: a fabrication method and the evaluation of samples)

A square sheet piece (sheet piece A) of 22 mm-square was cut out from a perfluorocarbonsulfonic acid resin sheet (trade name: "Nafion115CS").

Then, two sheets of a square sheet piece (sheet piece B) of 20 m-square, which was a size smaller than the sheet piece A, were cut out from the sheet sample (20-µm adhesive layer/25-µm PET).

The sheet piece A was interposed between the two sheet pieces B so as to bring about a state that the adhesive layers of the sheet pieces B contacted the sheet piece A, and the sheet pieces B protruded uniformly in about 1-mm width on the periphery of the sheet piece A, to thereby make a laminate.

The laminate was fed to a rubber roller rotating at a peripheral speed of 0.5 m/min and at 25°C, and impressed with a pressure (line pressure) of 25.6 MPa/cm by the rubber roller to adhere the sheet piece A and the sheet pieces B at the ordinary temperature to thereby make a sample for hot water adhesion test.

The sample for hot water adhesion test was evaluated by being immersed in lightly boiled water for 3 hours.

Then, the results of the evaluation were judged such that: the case where no peeling at all between the sheet piece A and the sheet pieces B was observed was "○"; the case where peeling was partially observed was "Δ"; and the case where complete peeling was observed was "x".

The evaluation results and the results of measurements of the storage elastic moduli at 40°C of the resin compositions are shown in Table 1.

### (Examples 2 and 3, and Comparative Examples 1 and 2)

The evaluations were carried out as in Example 1, except for using blending shown in Table 1 for resin compositions used for formation of adhesive agent layers. The results are shown in Table 1.

**[Table 1]**

| Blending (parts by mass) | | | | | Example 1 | Example 2 | Example 3 | Comparative Example 1 | Comparative Example 2 |
|---|---|---|---|---|---|---|---|---|---|
| | | Tg | Tm | Ts | | | | | |
| Crystalline Polyester Resin | A1-1 | -60 | 107 | - | 100 | 100 | - | - | - |
| | A1-2 | -70 | 126 | - | - | - | 100 | - | - |
| | A1-3 | 8 | 138 | - | - | - | - | 100 | - |
| | A1-4 | 14 | 100 | - | - | - | - | - | 100 |
| Epoxy Resin | C1-1 | - | - | 89 | 15 | 15 | - | - | - |
| | B1-2 | - | - | 97 | 10 | 10 | 25 | 25 | 25 |
| | B1-3 | - | - | 144 | - | - | - | - | - |
| Isocyanate | X1-1 | | | | 2 | 8 | 2 | 2 | 2 |
| Talc Powder | Z1-1 | | | | 25 | 25 | 25 | 25 | 25 |
| Total Number of Parts | | | | | 152.0 | 152.0 | 152.0 | 152.0 | 152.0 |
| Storage Elastic Modulus G' (MPa) | | | | | 3.4 | 2.9 | 4.1 | 5.1 | 5.9 |
| Adhesive Force at Ordinary Temperature (N/cm) | | | | | 21.6 | 17.9 | 10.7 | 0.01 | 0.05 |
| Hot Water Adhesion Test (Hot Water Peeling) | | | | | Δ | ○ | ○ | × | × |

It is clear also from the above results that the present invention can provide a sealant excellent in the wet heat resistance and the adhesivity at ordinary temperature.

### (Test 2)

Then, Test 2 will be described.

### (Materials to be use)

Hot melt adhesive agents being resin compositions were fabricated using the following materials, and evaluated for the heat resistances.

### (Crystalline polyester resins (A))

A2-1: a crystalline polyester resin of: a number-average molecular weight of about 30,000; a Tg of -60°C; and a Tm of 107°C
A2-2: a crystalline polyester resin of: a number-average molecular weight of about 35,000; a Tg of -70°C; and a Tm of 126°C
A2-3: a crystalline polyester resin of: a number-average molecular weight of about 30,000; a Tg of -14°C; and a Tm of 100°C

### (A noncrystalline polyester resin (B))

B2-1: a noncrystalline polyester resin of: a number-average molecular weight of about 23,000; and a Tg of 67°C,

### (An epoxy resin (C))

C2-1: a bisphenol A epoxy resin of: a molecular weight of about 38,000; and a softening point of 144°C

### (An isocyanate-based crosslinking agent (X))

X2-1: xylylene diisocyanate

### (Another additive (Z))

Z2-1: a talc powder

### (Reference Example 2-1)

A vanish was prepared which contained the crystalline polyester resin A2-1, the noncrystalline polyester resin B2-1, the epoxy resin C2-1, the isocyanate-based crosslinking agent X2-1 and the talc powder Z2-1 in a blending shown in the following Table 2 in an organic solvent, and a release film was coated with the vanish and then dried to thereby fabricate a hot melt adhesive sheet of about 50 µm in dry thickness.

A square sheet piece of 10 mm-square was cut out from the hot melt adhesive sheet to thereby make a sample for evaluation.

### (Evaluation of the shearing adhesive force: hot water resistance)

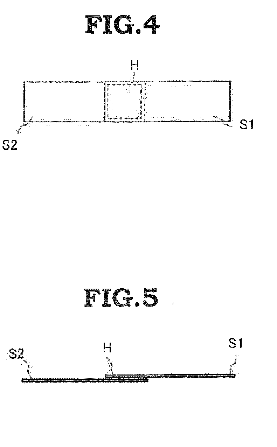

The 10 mm-square sheet piece was evaluated using two sheets of strip metal pieces S1 and S2 as shown in FIGS. 4 and 5.

The metal pieces S1 and S2 were formed of the same material in the same shape, and were formed of a stainless steel (SUS304) in a shape of 13 mm wide × 35 mm long × 0.1 thick.

The metal pieces were mutually shifted in the longitudinal direction, and arranged so that end parts thereof were overlapped over about 13 mm. Then, the test piece S was interposed therebetween so as to be located nearly at the center of the overlapped region of 13 mm-square.

This was heat pressed at 150°C for 60 sec to thereby make a sample for shearing adhesive force evaluation.

The heat press was carried out so that a pressure of 2 MPa was impressed in terms of area of the sheet piece S.

This evaluation sample was spontaneously cooled in a room of room temperature of 25°C for 3 hours, and then subjected to a tensile test.

The tensile test was carried out at a tensile rate of 50 mm/min by chucking the one metal piece S1 and the other metal piece S2, respectively, on a tensile tester.

Then, the tensile test was carried out until the evaluation sample broke, and the evaluation was carried out using as an initial shearing adhesive force a value obtained by dividing an observed maximum stress by an adhesive area by the hot melt adhesive sheet (Table 2 "initial").

Further, an evaluation sample fabricated similarly was subjected to a hot water test by immersing the sample in distilled water at 95°C for 14 days (Table 2 "after 14 days").

The evaluation sample after the hot water test was cleaned of moisture by wiping and dried, then spontaneously cooled in a room of room temperature of 25°C for 3 hours, thereafter measured for the shearing adhesive force similarly to the above; and a value of the shearing adhesive force after the hot water test was determined in percentage with a value of the initial shearing adhesive force being taken to be 100% to thereby determine a residual ratio of the shearing adhesive force (Table 2 "residual ratio").

The measurements of the shearing adhesive forces of the initial and after the hot water test were carried out while each measurement using three of the evaluation samples, and respective arithmetic average values were determined.

### (Reference Examples 2-2 and 2-3, Reference Comparative Example 2-1)

Hot melt adhesive sheets were fabricated as in Reference Example 2-1, except for altering materials to be used to blending shown in Table 2, and evaluated as in Reference Example 2-1.

The evaluation results are shown in the following Table 2.

In the every Reference Example 2-1 to 2-3, the remaining of epoxy groups was confirmed by the measurement using FTIR also after the adhesion of the metal pieces.

**[Table 2]**

| Blending (parts by mass) | | Reference Example 2-1 | Reference Example 2-2 | Reference Example 2-3 | Reference Comparative Example 2-1 |
|---|---|---|---|---|---|
| | A2-1 | - | 75 | - | 100 |
| Crystalline Polyester Resin | A2-2 | 75 | - | - | - |
| | A2-3 | - | - | 75 | - |
| Noncrystalline Polyester Resin | B2-1 | 25 | 25 | 25 | - |
| Epoxy Resin | C2-1 | 25 | 25 | 25 | 25 |
| Isocyanate | X2-1 | 2 | 2 | 2 | 2 |
| Talc Powder | Z2-1 | 25 | 25 | 25 | 25 |
| Total Number of Parts | | 152.0 | 152.0 | 152.0 | 152.0 |
| Shearing Adhesive Force [MPa] | initial | 11.6 | 10.1 | 10.9 | 9.6 |
| | after 14 days | 7.8 | 7.3 | 5.1 | 3.1 |
| Residual ratio (after 14 days/initial) (%) | | 67 | 73 | 46 | 33 |

It is clear also from the above results that Reference Examples 2-1 to 2-3 could provide hot melt adhesive agents excellent in the wet heat resistance.

It can also be understood from the above results that the use of hot melt adhesive agents thus hardly causing the wet heat deterioration can provide a sealant for a fuel cell excellent in the heat resistance.

### (Test 3)

Then, Test 3 will be described.

### (Materials to be used)

Hot melt adhesive agents being resin compositions were fabricated using the following materials, and evaluated for the heat resistances.

### (Crystalline polyester resins (A))

A3-1: a crystalline polyester resin of: a number-average molecular weight of about 30,000; a Tg of -60°C; and a Tm of 107°C
A3-2: a crystalline polyester resin of: a number-average molecular weight of about 35,000; a Tg of -70°C; and a Tm of 126°C
A3-3: a crystalline polyester resin of: a number-average molecular weight of about 35,000; a Tg of 8°C; and a Tm of 138°C

### (A noncrystalline polyester resin (B))

B3-1: a noncrystalline polyester resin of: a number-average molecular weight of about 23,000; and a g of 67°C,

### (Epoxy resins (C))

C3-1: a bisphenol A epoxy resin of: a molecular weight of about 3,800; and a softening point of 144°C
C3-2: a bisphenol A epoxy resin of: a molecular weight of about 70,000; and a softening point of 80°C

### (An isocyanate-based crosslinking agent (X))

X3-1: xylylene diisocyanate

### (Another additive (Z))

Z3-1: a talc powder

### (Reference Example 3-1)

A vanish was prepared which contained the crystalline polyester resin A3-1, the noncrystalline polyester resin B3-1, the epoxy resin C3-1, the isocyanate-based crosslinking agent X3-1 and the talc powder Z3-1 in a blending shown in the following Table 3 in an organic solvent, and a release film was coated with the vanish and then dried to thereby fabricate a hot melt adhesive sheet of about 50 µm in dry thickness.

A square sheet piece of 10 mm-square was cut out from the hot melt adhesive sheet to thereby make a sample for evaluation.

### (Evaluation of the shearing adhesive force: hot water resistance)

The similar measurement as "(Evaluation of the shearing adhesive force: hot water resistance)" in Test 2 was carried out.

### (Reference Examples 3-2 and 3-3, and Reference Comparative Examples 3-1 and 3-2)

Hot melt adhesive sheets were fabricated as in Reference Example 3-1, except for altering materials to be used to blending shown in Table 3, and evaluated as in Reference Example 3-1.

The evaluation results are shown in the following Table 3.

In the every Reference Example 3-1 to 3-3, the remaining of epoxy groups was confirmed by the measurement using FTIR also after the adhesion of the metal pieces.

**[Table 3]**

| Blending (parts by mass) | | Reference Example 3-1 | Reference Example 3-2 | Reference Example 3-3 | Reference Comparative Example 3-1 | Reference Comparative Example 3-2 |
|---|---|---|---|---|---|---|
| Crystalline Polyester Resin | A3-1 | 75 | - | - | - | - |
| | A3-2 | - | 75 | - | 75 | - |
| | A3-3 | - | - | 75 | - | 75 |
| Noncrystalline Polyester Resin | B3-1 | 25 | 25 | 25 | 25 | 25 |
| Epoxy Resin | C3-1 | 25 | 25 | 25 | - | - |
| | C3-2 | - | - | - | 25 | 25 |
| Isocyanate | X3-1 | 2 | 2 | 2 | 2 | 2 |
| Talc Powder | Z3-1 | 25 | 25 | 25 | 25 | 25 |
| Total Parts | | 152.0 | 152.0 | 152.0 | 152.0 | 152.0 |
| Shearing Adhesive Force [MPa] | initial | 10.1 | 11.6 | 10.8 | 19.0 | 19.0 |
| | after 14 days | 7.3 | 7.8 | 5.1 | 0.7 | 0.9 |
| Residual ratio (after 14 days/initial) (%) | | 72 | 67 | 47 | 4 | 5 |

It is clear also from the above results that Reference Examples 3-1 to 3-3 could provide hot melt adhesive agents excellent in the wet heat resistance.

It can also be understood from the above results that the use of hot melt adhesive agents thus hardly causing the wet heat deterioration can provide a sealant for a fuel cell excellent in the heat resistance.

### (Test 4)

Then, Test 4 will be described.

### (Materials to be used)

Hot melt adhesive agents being resin compositions were fabricated using the following materials, and evaluated for the heat resistances.

### (A crystalline polyester resins (A))

A4-1: a crystalline polyester resin of: a number-average molecular weight of 30,000; a melting point (Tm) of 107°C; and a glass transition temperature (Tg) of -60°C

### (C Epoxy resins)

(C4-1-1): a bisphenol A epoxy resin of a softening point (Ts) of 64°C ("first epoxy resin" of a number-average molecular weight of about 900, and an epoxy equivalent of 450 to 500 g/eq)
(C4-1-2): a bisphenol A epoxy resin of a softening point (Ts) of 89°C ("first epoxy resin" of a number-average molecular weight of about 1,300, and an epoxy equivalent of 670 to 770 g/eq)
(C4-2-1): a bisphenol A epoxy resin of a softening point (Ts) of 97°C ("second epoxy resin" of a number-average molecular weight of about 1,650, and an epoxy equivalent of 875 to 975 g/eq)
(C4-2-2): a bisphenol A epoxy resin of a softening point (Ts) of 144°C ("second epoxy resin" of a number-average molecular weight of about 3,800, and an epoxy equivalent of 2,400 to 3,300 g/eq)

### (An isocyanate-based crosslinking agent (X))

X4-1: xylylene diisocyanate

### (Another additive (Z))

Z4-1: a talc powder (untreated product)

### (Reference Example 4-1)

A vanish was prepared which contained the crystalline polyester resin A4-1, the epoxy resins (C4-1-1, C4-2-2), the isocyanate-based crosslinking agent X4-1 and the talc powder Z4-1 in a blending shown in the following Table 4 in an organic solvent, and a release film was coated with the vanish and then dried to thereby fabricate a hot melt adhesive sheet of about 50 µm in dry thickness.

A square sheet piece of 10 mm-square was cut out from the hot melt adhesive sheet to thereby make a sample for evaluation.

### (Evaluation of the shearing adhesive force: hot water resistance)

The similar measurement as "(Evaluation of the shearing adhesive force: hot water resistance)" in Test 2 was carried out, except for carrying out the heat press at 100°C for 4 sec to fabricate a sample for shearing adhesive force evaluation, and carrying out the immersion for 10 days of the evaluation sample in distilled water in the hot water test.

### (Reference Example 4-2, and Reference Comparative Example 4-1)

Hot melt adhesive sheets were fabricated as in Reference Example 4-1, except for altering materials to be used to blending shown in Table 4, and evaluated as in Reference Example 4-1.

The evaluation results are shown in the following Table 4.

In all of Reference Examples 4-1 and 4-2, the remaining of epoxy groups was confirmed by the measurement using FTIR also after the adhesion of the metal pieces.

**[Table 4]**

| Blending (parts by mass) | | Reference Example 4-1 | Reference Example 4-2 | Reference Comparative Example 4-1 |
|---|---|---|---|---|
| Crystalline Polyester Resin | A4-1 (Tm: 107°C, Tg:-60°C) | 100 | 100 | 100 |
| Epoxy Resin | C4-1-1 (Ts:64°C) | 15 | - | 25 |
| | C4-1-2 (Ts:89°C) | - | 15 | - |
| | C4-2-1 (Ts: 97°C) | - | 10 | - |
| | C4-2-2 (Ts: 144°C) | 10 | - | - |
| Isocyanate | X4-1 | 2 | 2 | 2 |
| Talc Powder | Z4-1 | 25 | 25 | 25 |
| Total Parts | | 152.0 | 152.0 | 152.0 |
| Shearing Adhesive Force [MPa] | initial | 8.2 | 8.0 | 6.0 |
| | after 10 days in hot water | 5.1 | 5.4 | 3.9 |

It is clear also from the above results that Reference Examples 4-1 and 4-2 could provide hot melt adhesive agents excellent in the wet heat resistance and the low-temperature adhesivity.

It can also be understood from the above results that the use of hot melt adhesive agents thus hardly causing the wet heat deterioration can provide a sealant for a fuel cell excellent in the heat resistance.

### (Test 5)

Then, Test 5 will be described.

### (Evaluation Experiment 1)

### (Materials to be used)

Hereinafter, abbreviations and details of raw materials utilized in Evaluation Experiment 1 of an adhesive resin composition will be described.

### (A crystalline polyester resin (A))

### (A5-1)

A crystalline polyester resin of a number-average molecular weight of about 35,000, a specific gravity (30°C) of 1.15, a Tg of -70°C, and a Tm of 126°C

### (A noncrystalline polyester resin (B))

### (B5-1)

A noncrystalline polyester resin of a number-average molecular weight of about 23,000, a specific gravity (30°C) of 1.26, and a Tg of 67°C

### (An epoxy resin (C))

### (C5-1)

A bisphenol A epoxy resin of a molecular weight of about 3,800 and a softening point of 144°C

### (An isocyanate-based crosslinking agent (X))

### (X5-1) xylylene diisocyanate

### (Another additive (Z))

### (Z5-1) A talc powder

### (Reference Example 5-1)

### (Fabrication of an adhesive sheet)

A coating liquid was prepared by dispersing and dissolving the (A5-1) crystalline polyester resin, the (B5-1) noncrystalline polyester resin, the (C5-1) epoxy resin, the (X5-1) isocyanate-based crosslinking agent and the (Z5-1) talc powder in an organic solvent so as to become 75:25:25:2:25 (A5-1:B5-1:C5-1:X5-1:Z5-1) in mass proportion; and a release film subjected to a surface release treatment was coated with the coating liquid, and thereafter dried to thereby form an adhesive agent layer of about 50 µm in dry thickness.

The adhesive agent layer was peeled from the release film to thereby fabricate a single-layer adhesive sheet having an adhesive agent layer alone.

### (Checking of the phase structure)

A sample for TEM observation of the adhesive sheet was fabricated by a frozen ultrathin section method.

Here, the ultrathin sample for TEM observation was fabricated so that the cutting direction became the thickness direction of the adhesive sheet, subjected to a heavy metal dyeing treatment, thereafter set on a TEM (made by Hitachi High-Technologies Corp., model: "H-7650") and observed at an acceleration voltage of 100 kV.

Then, whether or not a matrix-domain phase structure was formed in the adhesive sheet interior, and whether or not domain particles having a size of 0.2 µm or more were present in plural numbers were checked by the TEM photograph.

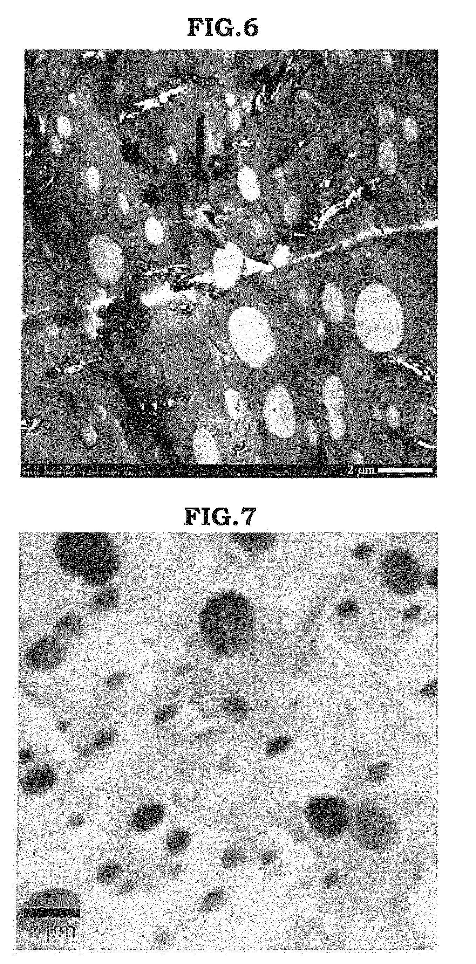

Here, the TEM photograph taken for the sample for TEM observation sampled from the adhesive sheet of Reference Example 5-1 is shown in FIG. 6.

As is clear also from FIG. 6, in the adhesive sheet of Reference Example 5-1, a matrix-domain phase structure was formed and domain particles having a size of 0.2 µm or more were present in plural numbers.

Then, also whether the noncrystalline polyester resin was contained mainly in the domain phase or in the matrix phase in the matrix-domain phase structure was checked by microscopic Raman mapping using the following condition.

The result of the microscopic Raman mapping carried out on the sample fabricated from the adhesive sheet of Reference Example 5-1 is shown in FIG. 7.

As a result of the microscopic Raman mapping, it was confirmed that the domains indicated by deep color in FIG. 7 were formed of the noncrystalline polyester, and the matrix indicated by light color was formed of the crystalline polyester.

### <microscopic Raman mapping condition>

Apparatus: SNOM/AFM/Raman Combination Instrument (made by WItec GmbH, alpha300RSA)
Excitation wavelength: 532 nm

These results are shown in Table 5.

In Table 5, the case where a matrix-domain phase structure and domain particles having a size of 0.2 µm or more could be confirmed in the TEM photograph is shown as judgment "○", and the case where these could not be confirmed is shown as judgment "×".

Further in Table 5, the case where the noncrystalline polyester resin was seen as being contained mainly in the domain phase is shown as judgment "D", and the case where the noncrystalline polyester resin was seen as being contained mainly in the matrix phase is shown as judgment "M".

### (Fabrication of a test piece for adhesivity evaluation)

The adhesive sheet of 50 µm in thickness was interposed and heat pressed between a polyphenylene sulfide resin (PPS) film of 100 µm in thickness and a polyimide resin (PI) film of 50 µm in thickness to thereby form a laminate sheet of a PPS film/the adhesive sheet/a PI film

Here, the heat press was carried out by bringing a hot plate of 35°C into contact with the PPS film side and a hot plate of 160°C into contact with the PI film side, and applying a pressure of 0.2 MPa by the hot plates for 30 sec.

Then, after the heat pressing, the laminate sheet was held in an environment of 23°C for 3 days, and then cut into a 10 mm width to thereby fabricate a strip test piece.

### (Evaluation of the initial adhesivity)

The PPS film was peeled from the adhesive sheet in one end part in the longitudinal direction of the test piece; and peeling forces when the peeling of the PPS film was continued at a rate of 10 mm/min were measured as an initial adhesive force.

The measurement of the initial adhesive force was carried out under the temperature condition of 23°C and at a peeling angle of 180° (180° peeling).

### (Evaluation of the wet heat resistance)

The test piece was immersed in hot water of 98°C for a predetermined time (100 hours, 250 hours), pulled up from the hot water, held in an environment of 23°C for 1 day, and thereafter, was subjected to a 180°C peeling test similarly to the above-mentioned initial adhesivity evaluation.

Then, a maintenance rate of the adhesive force was calculated by dividing the peeling force measured at this time by the initial peeling force.

The results are shown in Table 5.

### (Reference Examples 5-2 to 5-4 and Reference Comparative Examples 5-1 to 5-5)

Adhesive sheets were fabricated as in Reference Example 5-1 and evaluated as in Reference Example 5-1, except for using blending contents of the adhesive sheets shown in Tables 5 and 6.

The results are shown in Tables 5 and 6, respectively.

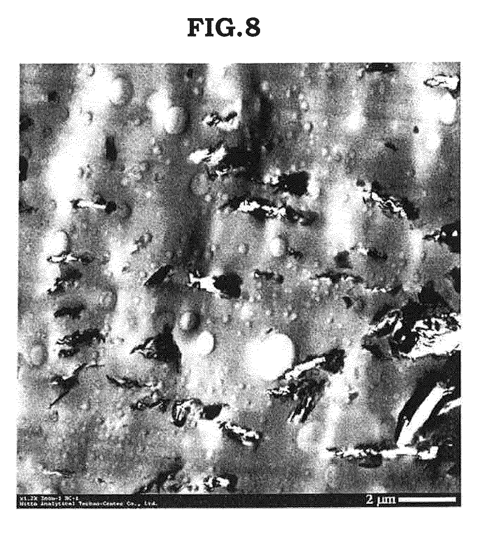

FIG. 8 shows a TEM photograph taken for a sample for TEM observation sampled from the adhesive sheet of Reference Example 5-3.

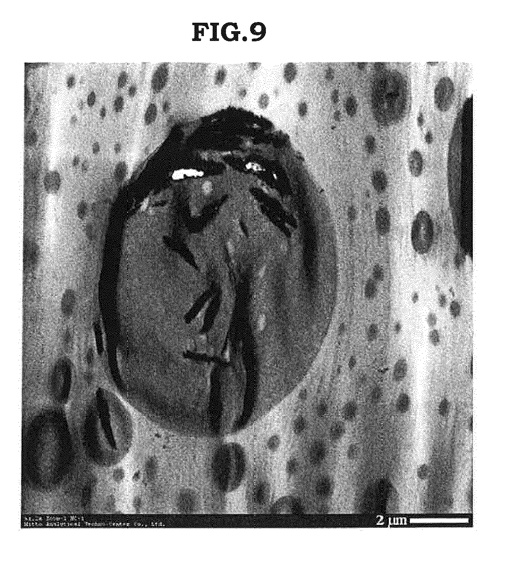

Further FIG. 9 shows a TEM photograph taken for a sample for TEM observation sampled from the adhesive sheet of Reference Comparative Example 5-2.

**[Table 5]**

| Blending (parts by mass) | | | Reference Example 5-1 | Reference Example 5-2 | Reference Example 5-3 | Reference Example 5-4 |
|---|---|---|---|---|---|---|
| Crystalline Polyester Resin | | A5-1 | 75 | 95 | 90 | 50 |
| Noncrystalline Polyester Resin | | B5-1 | 25 | 5 | 10 | 50 |
| Epoxy Resin | | C5-1 | 25 | 25 | 25 | 25 |
| Isocyanate | | X5-1 | 2 | 2 | 2 | 2 |
| Talc Powder | | Z5-1 | 25 | 25 | 25 | 25 |
| Domain-Matrix Phase Structure | | | ○ | ○ | ○ | ○ |
| Domain of 0.2 µm or more | | | ○ | ○ | ○ | ○ |
| Noncrystalline Polyester Resin | | | D | D | D | D |
| Initial Adhesivity | Peeling Force [N/cm] | | 5.2 | 9.3 | 7.8 | 5.2 |
| After 100 hours of Hot Water Immersion | Peeling Force [N/cm] | | 3.3 | 2.7 | 2.8 | 2.9 |
| | Maintenance Rate [%] | | 63 | 29 | 36 | 56 |
| After 250 hours of Hot Water Immersion | Peeling Force [N/cm] | | 2.6 | 1.0 | 1.5 | 3.3 |
| | Maintenance Rate [%] | | 50 | 11 | 19 | 64 |

**[Table 6]**

| Blending (parts by mass) | | | Reference Comparative Example 5-1 | Reference Comparative Example 5-2 | Reference Comparative Example 5-3 | Reference Comparative Example 5-4 | Reference Comparative Example 5-5 |
|---|---|---|---|---|---|---|---|
| Crystalline Polyester Resin | | A5-1 | 100 | 25 | 2.5 | 1 | - |
| Noncrystalline Polyester Resin | | B5-1 | - | 75 | 97.5 | 99 | 100 |
| Epoxy Resin | | C5-1 | 25 | 25 | 25 | 25 | 25 |
| Isocyanate | | X5-1 | 2 | 2 | 2 | 2 | 2 |
| Talc Powder | | Z5-1 | 25 | 25 | 25 | 25 | 25 |
| Domain-Matrix Phase Structure | | | ○*¹ | ○ | ○ | ○ | × |
| Domain of 0.2 µm or more | | | - | ○ | -*² | -*² | - |
| Noncrystalline Polyester Resin | | | - | M | M | M | M |
| Initial Adhesivity | Peeling Force [N/cm] | | 9.8 | 2.2 | 0.2 | 0.8 | 2.2 |
| After 100 hours of Hot Water Immersion | Peeling Force [N/cm] | | 2.8 | 4.9 | 2.6 | 1.8 | 3.0 |
| | Maintenance Rate [%] | | 29 | -*³ | -*³ | -*³ | -*³ |
| After 250 hours of Hot Water Immersion | Peeling Force [N/cm] | | 0.1 | 1.0 | 0.3 | 0.1 | 0.2 |
| | Maintenance Rate [%] | | 1 | -*³ | -*³ | -*³ | -*³ |

| | | | | | | | |
|---|---|---|---|---|---|---|---|
| *1: The domain phase of the epoxy resin was dispersed in the matrix phase of the crystalline polyester resin. *2: The matrix phase and the domain phase were reversed. *3: No measurement was carried out because the fracture mode was not interfacial fracture but cohesive fracture in the peeling force test, so comparison with the value of the interfacial fracture could not be carried out. | | | | | | | |

The adhesive sheet of Reference Comparative Example 5-1 containing no noncrystalline polyester resin as described above almost lost the adhesive force after 250 hours of the hot water immersion.

The adhesive sheets of Reference Comparative Examples 5-2 to 5-5 in which a noncrystalline polyester resin formed a matrix phase exhibited low values of initial adhesive forces in the evaluation results.

By contrast, the adhesive sheets of Reference Examples 5-1 to 5-4 and adhesive sheets (Table 7) of Reference Examples 5-5 to 5-9 described later exhibited high initial adhesive forces, and had adhesive forces in some degree even after 250 hours of the hot water immersion.

That is, it is clear also from the above results that the Reference Examples could provide adhesive resin compositions and adhesive sheets excellent in the initial adhesivity and the wet heat resistance.

### (Evaluation Experiment 2)

The evaluation of the adhesivity and the wet heat deterioration was carried out as in Evaluation Experiment 1, by using, in addition to (A5-1), (B5-1), (C5-1), (X5-1) and (Z5-1) utilized in Evaluation Experiment 1 of an adhesive resin composition, the following raw materials in a proportion shown in the following Table 7.

### (Crystalline polyester resins (A))

### (A5-2)

A crystalline polyester resin of a number-average molecular weight of about 30,000, a specific gravity (30°C) of 1.15, a Tg of -60°C, and a Tm of 107°C

### (A5-3)

A crystalline polyester resin of a number-average molecular weight of about 30,000, a Tg of 8°C, and a Tm of 138°C

### (Noncrystalline polyester resins (B))

### (B5-2)

A noncrystalline polyester resin of a number-average molecular weight of about 23,000, a specific gravity (30°C) of 1.20, and a Tg of 7°C

### (B5-3)

A noncrystalline polyester resin of a number-average molecular weight of about 23,000, a specific gravity (30°C) of 1.25, and a Tg of 47°C

### (B5-4)

A noncrystalline polyester resin of a number-average molecular weight of about 18,000, a specific gravity (30°C) of 1.28, and a Tg of 79°C

### (An epoxy resin (C))

### (C5-2)

A bisphenol A epoxy resin of a molecular weight of about 1,300 and a softening point of 89°C

**[Table 7]**

| Blending (parts by mass) | | | Reference Example 5-5 | Reference Example 5-6 | Reference Example 5-7 | Reference Example 5-8 | Reference Comparative Example 5-6 | Reference Example 5-9 | Reference Comparative Example 5-7 | Reference Example 5-10 |
|---|---|---|---|---|---|---|---|---|---|---|
| Crystalline Polyester Resin | | A5-1 | - | 75 | 75 | 75 | - | 75 | 75 | 75 |
| | | A5-2 | 75 | - | - | - | - | - | - | - |
| | | A5-3 | - | - | - | - | 75 | - | - | - |
| Noncrystalline Polyester Resin | | B5-1 | 25 | - | - | 25 | 25 | - | 25 | 25 |
| | | B5-2 | - | - | - | - | - | 25 | - | - |
| | | B5-3 | - | 25 | - | - | - | - | - | - |
| | | B5-4 | - | - | 25 | - | - | - | - | - |
| Epoxy Resin i | | C5-1 | 25 | 25 | 25 | - | 25 | 25 | - | 25 |
| | | C5-2 | - | - | - | 25 | - | - | - | - |
| Isocyanate | | X5-1 | 2 | 2 | 2 | 2 | 2 | 2 | 2 | 2 |
| Talc Powder | | Z5-1 | 25 | 25 | 25 | 25 | 25 | 25 | 25 | - |
| Domain-Matrix Phase Structure | | | ○ | ○ | ○ | ○ | ○ | ○ | ○ | ○ |
| Domain of 0.2 µm or more | | | ○ | ○ | ○ | ○ | ○ | ○ | ○ | ○ |
| Noncrystalline Polyester Resin | | | D | D | D | D | D | D | D | D |
| Initial Adhesivity | Peeling Force [N/cm] | | 7.6 | 4.5 | 5.6 | 7.6 | 9.0 | 7.0 | 4.7 | 2.5 |
| After 100 hours of Hot Water Immersion | Peeling Force [N/cm] | | 6.3 | 5.8 | 4.9 | 8.0 | 0.2 | 3.6 | 0.3 | 4.3 |
| | Maintenance Rate [%] | | 83 | 129 | 88 | 105 | -*⁴ | 51 | -*⁴ | 172 |
| After 250 hours of Hot Water Immersion | Peeling Force [N/cm] | | 6.3 | 2.3 | 3.1 | 7.5 | 0.2 | 3.2 | 0.01 | 5.1 |
| | Maintenance Rate [%] | | 83 | 51 | 55 | 99 | -*⁴ | -*⁵ | -*⁴ | 204 |

| | | | | | | | | | | |
|---|---|---|---|---|---|---|---|---|---|---|
| *4: No measurement was carried out because the fracture mode was not interfacial fracture but anchoring fracture in the peeling force test, so comparison with the value of the interfacial fracture could not be carried out. *5: No measurement was carried out because interfacial fracture and anchoring fracture were both generated in the peeling force test, so comparison with the value of the interfacial fracture could not be carried out. | | | | | | | | | | |

It is clear also from the above results that the present invention can provide adhesive resin compositions and adhesive sheets excellent in the initial adhesivity and the wet heat resistance.

## Claims

1. A sealant for use in contact with a polyelectrolyte membrane of a fuel cell generating power by a reaction of hydrogen and oxygen: wherein
the polyelectrolyte membrane is made of a perfluorocarbonsulfonic acid resin;
at least a surface of the sealant contacting the polyelectrolyte membrane is constituted of a resin composition comprising a crystalline polyester resin as a main component;
the resin composition has a storage elastic modulus at 40°C of 2.5 MPa or more and 5 MPa or less;
the resin composition further comprises an epoxy resin and an isocyanate-based crosslinking agent; and
the crystalline polyester resin is crosslinked with the isocyanate-based crosslinking agent.

2. The sealant according to claim 1, wherein the resin composition further comprises a noncrystalline polyester resin; and
the crystalline polyester resin and the noncrystalline polyester resin are crosslinked with the isocyanate-based crosslinking agent.

3. The sealant according to claim 2, wherein the crystalline polyester resin has a melting point lower than a softening point of the epoxy resin.

4. The sealant according to any one of claims 1 to 3, wherein the epoxy resin contained in the resin composition comprises a first epoxy resin having a softening point of 60°C or more and 90°C or less, and a second epoxy resin having a softening point of 95°C or more and 150°C or less.

5. The sealant according to any one of claims 1 to 4, wherein the resin composition further comprises a noncrystalline polyester resin;
the crystalline polyester resin has a glass transition temperature of 0°C or less and a melting point of 135°C or less; and
the resin composition has a matrix-domain phase structure of a matrix phase containing the crystalline polyester resin and the epoxy resin and a domain phase containing the noncrystalline polyester resin.

6. The sealant according to claim 5, wherein a proportion of the noncrystalline polyester resin to the total of the crystalline polyester resin and the noncrystalline polyester resin is 20% by mass or more and 50% by mass or less; and the domain phase contains domains having a size in cross-sectional shape of 0.2 µm or more.

7. The sealant according to any one of claims 1 to 6, wherein the crystalline polyester resin has a melting point of more than 100°C and less than 140°C.

8. The sealant according to any one of claims 1 to 7, wherein the epoxy resin is contained in the resin composition in a state that the epoxy resin has unreacted epoxy groups.

9. The sealant according to any one of claims 1 to 8, wherein the resin composition further comprises an inorganic filler; and the resin composition comprises a talc powder subjected to no surface treatment as the inorganic filler.
